# EUROPÄISCHE PATENTSCHRIFT

(11) **EP 4 326 582 B1**
(45) Veröffentlichungstag und Bekanntmachung des Hinweises auf die Patenterteilung: **09.10.2024**
(21) Anmeldenummer: 22761535.8
(22) Anmeldetag: 08.08.2022
(51) Int. Cl.: B60Q 3/80, H04R 1/02, B60Q 3/78, H05B 47/105, F21V 33/00, H05B 47/165, H05B 47/155

(54) **VERFAHREN ZUM ANPASSEN EINER BELEUCHTUNG UND SYSTEM ZUM ANPASSEN EINER BELEUCHTUNG**
METHOD FOR ADAPTING LIGHTING, AND SYSTEM FOR ADAPTING LIGHTING
PROCÉDÉ D'ADAPTATION D'ÉCLAIRAGE ET SYSTÈME D'ADAPTATION D'ÉCLAIRAGE

(30) Priorität: 23.08.2021 DE 102021121776
(43) Veröffentlichungstag der Anmeldung: 28.02.2024
(73) Patentinhaber: AUDI AG, 85057 Ingolstadt (DE)
(72) Erfinder: KARMANN, Jürgen, 86676 Ehekirchen (DE)
(74) Vertreter: RDL Patentanwälte PartG mbB
(86) Internationale Anmeldenummer: PCT/EP2022/072263
(87) Internationale Veröffentlichungsnummer: WO 2023/025581

(56) Entgegenhaltungen:
- EP-A1- 3 300 953
- EP-A2- 1 544 036
- DE-A1- 102013 011 188
- DE-A1- 102017 128 896
- DE-A1- 102019 001 332
- JP-A- H0 973 274

## Beschreibung

Die Erfindung betrifft ein Verfahren zum Anpassen einer Beleuchtung und ein System zum Anpassen einer Beleuchtung.

Eine Beleuchtung eines Innenraums eines Kraftfahrzeugs kann von einem Fahrer individuell angepasst werden.

Die Druckschrift DE 10 2017 131 029 A1 beschreibt eine Steuerung einer Tonausgabe für ein Fahrzeug.

Eine Beleuchtungsanordnung für eine Fahrzeugambientebeleuchtung ist aus der Druckschrift DE 10 2019 121 019 A1 bekannt.

Eine Steuerung für eine Beleuchtungsvorrichtung ist in der Druckschrift DE 10 2020 002 832 A1 beschrieben.

Die Druckschrift DE 10 2005 041 261 A1 beschreibt ein Begrüßungssystem zum Begrüßen eines Nutzers eines Kraftfahrzeugs.

Ein Verfahren zum Steuern einer Klimatisierungsvorrichtung eines Kraftfahrzeugs, eine Klimatisierungsvorrichtung sowie ein Kraftfahrzeug sind aus der Druckschrift DE 10 2014 019 158 B3 bekannt.

Die Druckschrift DE 10 2013 011 188 A1 beschreibt eine Ambiente-Beleuchtung für einen Innenraum eines Kraftfahrzeugs.

Aus der Druckschrift DE 10 2017 128 896 A1 ist eine Anordnung zur Beleuchtung eines Innenraums eines Kraftfahrzeugs bekannt.

Eine Steuerung einer Innenraumbeleuchtung ist aus der Druckschrift DE 10 2019 001 332 A1 bekannt.

Ein Display für ein Fahrzeugrad ist aus der Druckschrift EP 1 544 036 A2 bekannt.

Eine Beleuchtung für einen Innenraum eines Fahrzeugs ist aus der Druckschrift EP 3 300 953 A1 bekannt.

In der Druckschrift JP H09-73274 A ist eine Beleuchtung an einem Kofferraum eines Fahrzeugs gezeigt.

Vor diesem Hintergrund war es eine Aufgabe, eine Beleuchtung eines Innenraums eines Kraftfahrzeugs zu gestalten.

Diese Aufgabe wird durch ein Verfahren und ein System mit den Merkmalen der unabhängigen Patentansprüche gelöst. Ausführungsformen des Verfahrens und des Systems gehen aus den abhängigen Patentansprüchen und der Beschreibung hervor.

Das erfindungsgemäße Verfahren ist zum Anpassen einer Beleuchtung von mindestens einem Beleuchtungsmodul eines Kraftfahrzeugs an Klänge vorgesehen, die von einer Soundanlage, in der Regel von mindestens einem Lautsprecher des Kraftfahrzeugs, erzeugt und in einen Innenraum des Kraftfahrzeugs emittiert bzw. ausgegeben werden, wobei den Klängen mindestens ein Bild bzw. Foto, ggf. auch eine Abfolge von mehreren Bildern, als optisches Identifikationsmerkmal zugeordnet ist, das von dem mindestens einen Beleuchtungsmodul, unter Berücksichtigung der Klänge, zumindest abschnittsweise automatisch dynamisch dargestellt bzw. angezeigt und üblicherweise zeitlich korreliert mit den ausgegebenen Klängen in den Innenraum emittiert wird. Dabei ist es möglich, dass eine Anzeige des mindestens einen zumindest abschnittsweise dargestellten Bilds variiert wird, was auch abhängig von einer Abfolge der Klänge möglich ist. Das mindestens eine Bild wird von einem Auswahlmodul eingelesen.

In Ausgestaltung wird das mindestens eine Bild von dem mindestens einen Beleuchtungsmodul anhand mindestens eines akustischen Parameters, bspw. einer Frequenz und/oder Lautstärke, d. h. einer Amplitude bzw. eines Pegels, der Klänge bspw. animiert und dynamisch dargestellt. Hierbei wird eine Darstellung, bspw. eine Farbe und/oder Helligkeit, des mindestens einen Bilds automatisch und/oder dynamisch angepasst, wobei diese Darstellung mit dem mindestens einen akustischen Parameter korreliert ist bzw. wird. Das mindestens eine Bild, d. h. der mindestens eine Abschnitt des mindestens einen Bilds, wird abhängig von den akustischen Klängen, d. h. abhängig von den akustischen Parametern, automatisch und/oder dynamisch optisch variiert bzw. verändert.

Es ist möglich, dass das mindestens eine Bild als das mindestens eine optische Identifikationsmerkmal auf einer Hülle für einen Tonträger, der die Klänge umfasst, abgebildet bzw. dargestellt ist bzw. wird. Der Tonträger, bspw. eine CD bzw. Compact Disc oder eine Schallplatte (LP), umfasst bzw. speichert die Klänge. Generell wird das mindestens eine Bild einer Audioquelle, die die Klänge umfasst bzw. von der ausgehend die Klänge ausgegeben werden, zugeordnet. Dabei ist es möglich, dass die Audioquelle als Tonträger ausgebildet ist. Eine Audioquelle kann auch als Audiodatei bzw. Klangdatei ausgebildet sein. Somit ist es möglich, dass das mindestens eine Bild auch der Audio- bzw. Klangdatei, bspw. einer Musikdatei und/oder einem Hörbuch, zugordnet ist. Eine derartige Audiodatei liegt bspw. im mp3-Format vor. Es ist möglich, dass die Audiodatei und das mindestens eine der Audiodatei zugeordnete Bild als Tupel in einer Datenbank hinterlegt sind und aus der Datenbank über einen Livestream und somit über Echtzeitübertragung abgerufen werden, wobei die Klänge der Audiodatei in den Innenraum emittiert und abgespielt werden, wobei das der Audiodatei zugeordnete Bild in Abhängigkeit der Abfolge der Klänge abschnittsweise und mit einer Dynamik der Klänge bzw. einer Dynamik der Klänge entsprechend dargestellt wird.

Mit dem mindestens einen Bild kann mindestens ein Schöpfer, bspw. mindestens ein Musiker, der die Klänge produziert hat, abgebildet bzw. dargestellt sein bzw. werden.

Es ist möglich, dass die Klänge Musik, Stimmen und/oder Geräusche umfassen. Die Klänge weisen weiterhin einen bestimmten künstlerischen, bspw. musikalischen, Stil und/oder einen Rhythmus als zusätzliche akustische Parameter auf, an die die Darstellung des mindestens einen Bilds automatisch und/oder dynamisch angepasst wird.

Zu einem Zeitpunkt wird jeweils mindestens ein Ausschnitt des mindestens einen Bilds, in Ausgestaltung jeweils nur ein einziger Ausschnitt, dargestellt, wobei es möglich ist, dass der mindestens eine Ausschnitt bzw. ein entsprechender Abschnitt des Bilds als Reihe, bspw. als Zeile oder Spalte, des Bilds ausgebildet bzw. zu bezeichnen ist. Dabei ist es möglich, dass mehrere, in der Regel verschiedene, Abschnitte des mindestens einen Bilds nacheinander, bspw. zeilenweise oder spaltenweise, dargestellt werden. Dabei wird der mindestens eine Abschnitt mit einem Auswahlmodul ausgewählt. Das Auswahlmodul ist dazu ausgebildet, das Bild auch abschnittsweise zu scannen bzw. einzulesen. Dabei ist es möglich, dass das Auswahlmodul relativ zu dem Bild bewegt wird, wobei das Auswahlmodul und/oder seine Bewegung von der Datenverarbeitungseinheit gesteuert wird bzw. werden. Hierbei wird jeweils ein Abschnitt des Bilds von dem Auswahlmodul ausgewählt und eingelesen. Bei einer derartigen Bewegung wird das Bild von dem Auswahlmodul abschnittsweise dynamisch eingescannt und ein jeweilig eingescannter Abschnitt mit dem Beleuchtungsmodul dargestellt. In einem nicht erfindungsgemäßen Ausführungsbeispiel, ist es jedoch auch möglich, dass das mindestens eine Bild jeweils komplett dargestellt und dabei bspw. dynamisch animiert und/oder optisch verändert wird, wobei es an die Klänge automatisch und/oder dynamisch angepasst und entsprechend angepasst dargestellt wird. In Ausgestaltung wird das mindestens eine Bild reihenweise dargestellt, wobei die Abfolge von nacheinander dargestellten Reihen, bspw. Zeilen oder Spalten, der Abfolge der Klänge zugeordnet ist bzw. wird.

Das erfindungsgemäße System ist zum Anpassen einer Beleuchtung von mindestens einem Beleuchtungsmodul eines Kraftfahrzeugs an Klänge ausgebildet, die von einer Soundanlage, in der Regel von mindestens einem Lautsprecher, des Kraftfahrzeugs, erzeugt werden, wobei die Soundanlage dazu ausgebildet ist, die Klänge in einen Innenraum des Kraftfahrzeugs zu emittieren bzw. auszugeben und dabei die Klänge abzuspielen. Das System weist eine Datenverarbeitungseinheit auf, wobei den Klängen mindestens ein Bild, bspw. eine Abfolge von mehreren Bildern, als optisches Identifikationsmerkmal zugeordnet ist. Die Datenverarbeitungseinheit ist dazu ausgebildet, das mindestens eine Beleuchtungsmodul üblicherweise anzusteuern und eine Darstellung des mindestens einen Bilds von dem mindestens einen Beleuchtungsmodul abhängig von den Klängen automatisch und/oder dynamisch zu veranlassen. Dies erfolgt insbesondere zeitlich und/oder dynamisch korreliert mit den ausgegebenen, bspw. abgespielten, Klängen.

Weiterhin weist das System ein optisches Auswahlmodul, bspw. eine Kamera, auf, das auch als Scanner ausgebildet sein bzw. bezeichnet werden kann und dazu ausgebildet ist, das Bild zumindest abschnittweise bzw. kontinuierlich Abschnitt für Abschnitt einzulesen bzw. einzuscannen. Dabei ist es möglich, dass von dem Auswahlmodul jeweils immer nur ein Abschnitt des Bilds erfasst wird. Außerdem wird das Auswahlmodul relativ zu dem Bild mit einer einstellbaren Geschwindigkeit bewegt, wobei es entsprechend abschnittsweise und dynamisch erfasst wird, wobei das Bild von dem mindestens einen Beleuchtungsmodul abschnittsweise kontinuierlich und dynamisch dargestellt wird. Es ist auch möglich, dass das Bild abhängig von der einstellbaren bzw. eingestellten Geschwindigkeit des Auswahlmoduls relativ zu Abschnitten, bspw. Zeilen oder Spalten, des Bilds dynamisch dargestellt wird, wobei diese Geschwindigkeit in Ausgestaltung variiert wird.

Die Datenverarbeitungseinheit ist dazu ausgebildet, das mindestens eine Bild aus einer Datenbank als möglicher weiterer Komponente des Systems zu übernehmen und/oder über einen sensorischen und/oder optischen Scanner des Systems zumindest abschnittsweise einzuscannen. Dies ist auch dann möglich, während die Klänge erzeugt werden.

Das mindestens eine Beleuchtungsmodul ist als Display bzw. Anzeigefeld, bspw. der Soundanlage, und/oder als Innenraumbeleuchtung, bspw. als mindestens ein Lichtelement, des Kraftfahrzeugs ausgebildet. Das mindestens eine Beleuchtungsmodul weist bspw. mehrere Leuchtdioden (LEDs) auf, die, bspw. auch gleichzeitig, in unterschiedlichen Farben leuchten.

Die Soundanlage weist ein Wiedergabegerät für die Klänge auf, bspw. ein Abspielgerät für einen Tonträger, bspw. eine CD, und/oder eine Audioquelle, wobei die Soundanlage als Komponente des Systems ausgebildet sein kann. Dabei ist es möglich, dass das Wiedergabegerät bspw. auch als Computerprogramm ausgebildet ist, mit dem die Audioquelle aus einer Datenbank, bspw. über das Internet, geladen, und die Klänge als Livestream bzw. Echtzeitübertragung abgespielt werden. Das mindestens eine Beleuchtungsmodul kann ebenfalls als Komponente des Systems ausgebildet sein.

Mit dem Verfahren und dem System ist es möglich, sowohl eine Innenraumbeleuchtung als auch eine Außenraumbeleuchtung des Kraftfahrzeugs mit dem mindestens einen Beleuchtungsmodul dynamisch an Informationen, die auf dem Bild bzw. mit dem Bild dargestellt werden, anzupassen, wobei eine derartige Anpassung abhängig von den Informationen des Bilds ist. Hierbei ist es auch möglich, eine Farbe des Beleuchtungsmoduls an die Klänge dynamisch anzupassen. Somit ist es u. a. möglich, den Innenraum des Kraftfahrzeugs dynamisch zu beleuchten und dabei eine Assoziation mit jeweils aktuell gehörten Klängen, bspw. mit jeweils aktuell gehörter Musik, bereitzustellen. Dies umfasst somit eine Assoziation zwischen Licht, das von dem mindestens einen Beleuchtungsmodul bereitgestellt wird, und den gehörten Klängen, üblicherweise der gehörten Musik, wobei Insassen des Kraftfahrzeugs ein Zusammenhang zwischen gehörter Musik und dargestellter Beleuchtung bereitgestellt und/oder vermittelt wird. Dabei ist es möglich, dass das mindestens eine Beleuchtungsmodul als Teil der Innenraumbeleuchtung, bspw. als Lampe, oder der Außenraumbeleuchtung, bspw. als Scheinwerfer, des Kraftfahrzeugs ausgebildet ist. Es ist auch möglich, dass das mindestens eine Beleuchtungsmodul als Teil eines Kombiinstruments in dem Innenraum des Kraftahrzeugs ausgebildet ist.

In Ausgestaltung ist es möglich, das mindestens eine Bild einer Audioquelle, auf der Klänge, bspw. Musik, gespeichert sind, in einem Display bzw. Anzeigefeld des mindestens einen Beleuchtungsmoduls abhängig von den Klängen darzustellen. Dies betrifft bspw. mindestens ein Bild auf einem Cover bzw. einer Hülle eines Tonträgers, bspw. einer CD oder Schallplatte, wobei die Klänge auf diesem Tonträger mechanisch oder digital festgehalten, bspw. gespeichert, sind.

Es ist auch möglich, dass mindestens eine Audiodatei und das mindestens eine Bild in einer Datenbank als Tupel hinterlegt sind, wobei die mindestens eine Audiodatei die Klänge umfasst, wobei das mindestens eine Bild innerhalb der Datenbank der mindestens einen Audiodatei zugeordnet ist. Dabei ist es weiterhin möglich, dass das Cover bzw. die Hülle der CD passend zu einem jeweils gespielten Stück, bspw. Lied, und/oder Interpreten, mit dem Auswahlmodul bspw. zeilenweise gelesen und mit einem inneren Kommunikationslicht (ICL, Interior Communication Light) als das mindestens eine Beleuchtungsmodul, bspw. Display, abhängig von den Klängen dargestellt wird. Dabei wird das von dem mindestens einen Beleuchtungsmodul ausgestrahlte Licht mit der üblicherweise von der Soundanlage gespielten Musik assoziiert. Falls die Klänge über ein Radio bzw. eine Radiostation bereitgestellt werden ist es möglich, dass als das mindestens eine Bild ein Logo und/oder Symbol dieser Radiostation verwendet wird, wobei es sich um eine Radiostation handelt, die terrestrisch bzw. per Funk, oder digital empfangen wird. Es ist auch möglich, dass die mindestens eine Audiodatei und das mindestens eine der Audiodatei definiert zugeordnete Bild über eine Abspielliste bzw. Playlist bereitgestellt werden, bspw. als Funktion auf Abruf (function on demand). Das mindestens eine Bild kann bspw. auch gesungene und/oder gesprochene Texte der Klänge, bspw. der Musik und/oder eines Hörbuchs bzw. Hörspiels, darstellen bzw. anzeigen, wobei es möglich ist, jeweils eine gesungene und/oder gesprochene Zeile an Text synchron in den dem mindestens einen bspw. linienförmigen Beleuchtungsmodul darzustellen. In der Regel kann jedes Bild, bspw. auch ein Kunstwerk, den Klängen zugeordnet sein bzw. werden, wobei es möglich ist, dass ein derartiges Bild von einem Nutzer des Verfahrens und des Systems individuell hergestellt bzw. geschaffen bzw. bereitgestellt wird.

Ein Auslesen bzw. Scannen von Informationen des Bilds mit dem Auswahlmodul kann in unterschiedlichen Varianten durchgeführt werden. Dabei ist es möglich, dass das Bild bzw. dessen Informationen von dem Auswahlmodul bspw. unter unterschiedlichen Winkeln, in wechselnden Richtungen und/oder bei wechselnder Geschwindigkeit jeweils abschnittsweise ausgelesen wird bzw. werden. Somit ist es möglich, bei mehrmaligem Hören der Musik für die Beleuchtung eine größere Abwechslung einzubringen. Hierbei ist es möglich, die Geschwindigkeit, mit der das mindestens eine Bild ausgelesen bzw. gescannt wird, an ein Tempo und/oder einen Rhythmus der Klänge, insbesondere der Musik, dynamisch anzupassen. Es ist auch möglich, dass ein Bild von dem Auswahlmodul innerhalb einer definierbaren bzw. einstellbaren Zeitspanne, bspw. von eine Minute, vollständig eingelesen und entsprechend von dem mindestens einen Beleuchtungsmodul synchron dargestellt bzw. angezeigt wird.

Es ist auch möglich, dass als das Bild bspw. ein beliebiges eigenes Foto verwendet wird, das von dem mindestens einen Beleuchtungsmodul abhängig von den jeweils gespielten Klängen zumindest abschnittsweise automatisch und dynamisch dargestellt wird. Bei einem derartigen Bild bzw. Foto kann es sich auch um eine private Aufnahme handeln.

Bei dem Verfahren können auch mehrere Beleuchtungsmodule im Innenraum des Kraftfahrzeugs verwendet werden, wobei es möglich, das Bild abhängig von den Klängen mit einer kompletten Beleuchtung des Innenraums des Kraftfahrzeugs darzustellen.

Somit kann ein Insasse des Fahrzeugs als Kunde eine Kombination aus Klängen, bspw. Musik, und einer farblichen Gestaltung einer Beleuchtung des Innenraums dynamisch erleben und auch selbst gestalten.

In Ausgestaltung ist es u. a. möglich, Farben, die von dem mindestens einen Beleuchtungsmodul dargestellt werden, abhängig von Klängen zu steuern, wobei Informationen des Bilds als Medienobjekt, bspw. einer Grafik für ein Album einer CD, dargestellt werden.

Das mindestens eine Beleuchtungsmodul, mit dem das mindestens eine Bild abhängig von den Klängen automatisch und/oder dynamisch dargestellt wird, ist bspw. linienförmigen, schlitzförmig, rechteckig und/oder länglich ausgebildet und weist entsprechend ein linienförmiges, schlitzförmiges, rechteckiges und/oder längliches Anzeigefeld bzw. Display auf. Dabei weist es in möglicher Ausgestaltung mindestens eine Reihe an Leuchtdioden auf, die nebeneinander linienförmig angeordnet ist. Hier kann es sich, ja nach Ausgestaltung um lediglich eine Reihe oder mehrere Reihen an Leuchtdioden handeln. Ein derartiges linienförmiges Beleuchtungsmodul ist bspw. als Teil bzw. als Komponente eines Multiinstruments des Kraftfahrzeugs ausgebildet und in ein solches integriert.

Das Auswahlmodul zum Erfassen und/oder Scannen des Bilds, das begleitend zu den Klängen zumindest abschnittsweise automatisch und/oder dynamisch dargestellt wird, kann bspw. als Kamera ausgebildet sein bzw. bezeichnet werden, wobei das Auswahlmodul, bspw. die Kamera, einen linienförmigen, schlitzförmigen, rechteckigen und/oder länglichen Erfassungsbereich aufweist, mit dem es möglich ist, das Bild reihenweise, bspw. zeilenweise oder spaltenweise, zu erfassen, bspw. einzulesen bzw. zu scannen.

Es ist möglich, dass das Anzeigefeld von dem mindestens einen bspw. linienförmigen Beleuchtungsmodul und der Erfassungsbereich des Auswahlmoduls dieselben Proportionen aufweisen. Dabei ist es möglich, dass der von dem Auswahlmodul eingelesene und/oder ausgewählte Abschnitt des mindestens einen Bilds von dem mindestens einen Beleuchtungsmodul maßstabsgerecht dargestellt wird.

Die Erfindung ist anhand von Ausführungsformen in der Zeichnung schematisch dargestellt und wird unter Bezugnahme auf die Zeichnung schematisch und ausführlich beschrieben.
Figur 1 zeigt in schematischer Darstellung Details einer Ausführungsform des erfindungsgemäßen Systems bei Durchführung einer ersten Ausführungsform des erfindungsgemäßen Verfahrens.
Figur 2 zeigt in schematischer Darstellung Details aus Figur 1 bei Durchführung einer zweiten Ausführungsform des erfindungsgemäßen Verfahrens.
Figur 3 zeigt in schematischer Darstellung Details zum Durchführen einer dritten Ausführungsform des erfindungsgemäßen Verfahrens.

Die Figuren werden zusammenhängend und übergreifend beschrieben. Gleichen Bezugszeichen sind dieselben Komponenten zugeordnet.

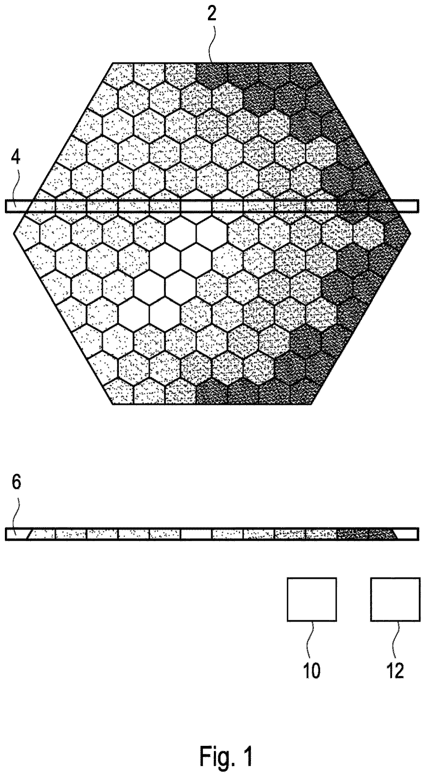

Die in Figur 1 schematisch dargestellte Ausführungsform des erfindungsgemäßen Systems ist für ein Kraftfahrzeug ausgebildet, das mindestens ein Beleuchtungsmodul 6 aufweist, das zum Beleuchten eines Innenraums des Kraftfahrzeugs ausgebildet ist. Außerdem weist das Kraftfahrzeug eine Soundanlage 10 mit mindestens einem Lautsprecher auf, die dazu ausgebildet ist, Klänge und somit auch Musik in den Innenraum des Kraftfahrzeugs zu emittieren.

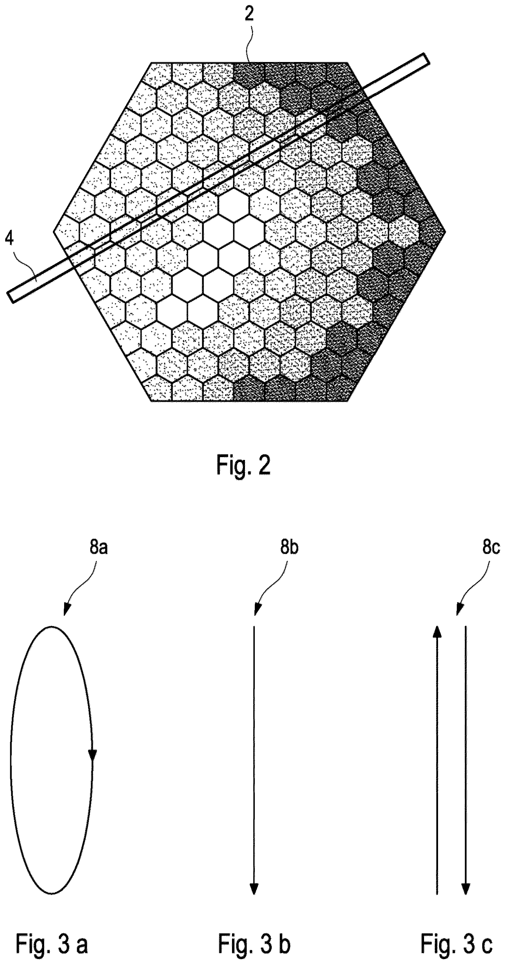

Das hier rechteckige und linienförmige Beleuchtungsmodul 6 und die Soundanlage 10, die hier lediglich in schematisch dargestellt sind, sind zugleich auch als Komponenten des vorgestellten Systems ausgebildet. Dieses umfasst als weitere Komponente auch eine Datenverarbeitungseinheit 12, bspw. eine Recheneinheit. Eine zusätzliche Komponente des Systems ist als Auswahlmodul 4, hier als optischer Scanner, ausgebildet und in den Figuren 1 und 2 jeweils schematisch dargestellt. Dieses Auswahlmodul 4 ist hier ebenfalls rechteckig und linienförmig ausgebildet und weist dieselben Proportionen wie das Beleuchtungsmodul 6 auf. Das Beleuchtungsmodul 6 ist hier als Komponente eines Multiinstruments des Kraftfahrzeugs ausgebildet, das in ein Armaturenbrett integriert ist.

Bei der Ausführungsform des Verfahrens wird eine Beleuchtung des Beleuchtungsmoduls 6 an Klänge, bspw. an Musik, angepasst, die von der Soundanlage 10 erzeugt und/oder gespielt werden. Dabei ist vorgesehen, dass den gespielten Klängen ein in den Figuren 1 und 2 schematisch dargestelltes Bild 2 zugeordnet ist. Dieses Bild 2 wird während eines Abspielens der Klänge durch die Soundanlage 10 von dem Beleuchtungsmodul 6 zumindest abschnittsweise automatisch und/oder dynamisch dargestellt, wobei das zumindest abschnittsweise dargestellte Bild 2 die Klänge der Soundanlage 10 dabei optisch begleitet und/oder untermalt.

Hierbei ist vorgesehen, dass das Bild 2 mit den Klängen, bspw. mit der Musik, assoziiert ist und/oder die Klänge repräsentiert, wobei es möglich ist, dass das Bild 2 eine Hülle bzw. ein Cover einer CD darstellt. Dieses Bild 2 ist in den Figuren 1 und 2 anhand mehrerer Pixel dargestellt, die in dem Bild 2 zeilenweise und spaltenweise angeordnet sind, wobei jedes Pixel hier exemplarisch eine Farbe eines Farbspektrums darstellt. Zwar ist das Bild 2 hier sechseckig bzw. hexagonal, es kann jedoch auch andere Formen aufweisen und u. a. viereckig, bspw. rechteckig, insbesondere quadratisch, sein.

Bei der Ausführungsform des Verfahrens wird das Auswahlmodul 4 relativ zu dem Bild 2 bewegt, wobei das Auswahlmodul 4 hierzu von der Datenverarbeitungseinheit 12 gesteuert wird. Hierbei wird von dem Auswahlmodul 4 zu einem Zeitpunkt jeweils nur ein länglicher, linienförmiger und/oder schlitzförmiger Abschnitt bzw. Ausschnitt des Bilds 2 erfasst. Weiterhin werden jene Pixel innerhalb einer Zeile und/oder Spalte des Bilds 2, die von dem Auswahlmodul 4 zu dem Zeitpunkt ausgewählt und/oder erfasst werden, auf dem Beleuchtungsmodul 6 synchron dargestellt.

Hierbei ist in Figur 1 vorgesehen, dass das Auswahlmodul 4 relativ zu dem Bild 2 zeilenweise bewegt wird, wobei jeweils nur eine Zeile des Bilds 2 von dem Auswahlmodul 4 erfasst wird. Dagegen ist in Figur 2 gezeigt, dass das Auswahlmodul 4 unter einem Winkel, bspw. einem spitzen Winkel, zu einer Außenkante des Bilds 2 bzw. zu Zeilen des Bilds 2 bewegt, d. h. verschoben, und dabei bspw. auch gedreht wird. In Ausgestaltung können unterschiedliche Muster 8a, 8b, 8c berücksichtigt werden, gemäß derer das Auswahlmodul 4 relativ zu dem Bild 2 bewegt wird. Dabei ist ein erstes derartiges Muster 8a in Figur 3a dargestellt, wobei dieses Muster 8a ellipsenförmig ausgebildet ist. In diesem Fall wird das Auswahlmodul 4 relativ zu dem Bild 2 ellipsenförmig, bspw. kreisförmig, gedreht. Wie ein zweites Muster 8b aus Figur 3b zeigt, ist es weiterhin möglich, das Auswahlmodul 4 in lediglich einer Richtung relativ zu dem Bild 2 zu bewegen, hier zu verschieben. Ein drittes Muster 8c, das in Figur 3c schematisch dargestellt ist, weist zwei zueinander parallele und entgegengesetzt orientierte Pfeile auf. In diesem Fall wird das Auswahlmodul 4 relativ zu dem Bild 2 hin und her bewegt, bspw. verschoben. Weiterhin ist es möglich, das Auswahlmodul 4 relativ zu dem Bild 2 in unterschiedlichen Richtungen und unter unterschiedlichen Winkeln zu bewegen. Dabei ist es auch möglich, das Auswahlmodul 4 relativ zu dem Bild 2 in unterschiedlichen Geschwindigkeiten zu bewegen, wobei es u. a. auch möglich ist, eine jeweilige Geschwindigkeit aktuell und/oder dynamisch zu ändern bzw. zu variieren, wobei diese Geschwindigkeit bspw. an einen Rhythmus und/oder ein Tempo einer zeitlichen Abfolge der Klänge angepasst wird bzw. ist. Weiterhin ist es möglich, bei einer Bewegung des Auswahlmoduls 4 relativ zu dem Bild 2 unterschiedliche Abschnitte bzw. Ausschnitte des Bilds 2 unterschiedlich häufig einzulesen bzw. einzuscannen.

### BEZUGSZEICHEN:

- 2: Bild
- 4: Auswahlmodul
- 6: Beleuchtungsmodul
- 8a, 8b, 8c: Muster
- 10: Soundanlage
- 12: Datenverarbeitungseinheit

## Patentansprüche

1. Verfahren zum Anpassen einer Beleuchtung von mindestens einem Beleuchtungsmodul (6) eines Kraftfahrzeugs an Klänge, die von einer Soundanlage (10) des Kraftfahrzeugs erzeugt und ausgegeben werden, wobei den Klängen mindestens ein Bild (2) zugeordnet ist, das von dem mindestens einen Beleuchtungsmodul (6) zumindest abschnittsweise und zeitlich korreliert mit den ausgegebenen Klängen automatisch dargestellt wird, wobei jeweils ein Abschnitt des mindestens einen Bilds (2) von einem Auswahlmodul (4) ausgewählt und eingelesen wird, **dadurch gekennzeichnet, dass** jeweils nur ein ausgewählter linienförmiger und/oder schlitzförmiger Abschnitt des mindestens einen Bilds (2) dargestellt wird.

2. Verfahren nach Anspruch 1, bei dem das mindestens eine Bild (2) von dem mindestens einen Beleuchtungsmodul (6) anhand mindestens eines akustischen Parameters der Klänge dynamisch dargestellt wird.

3. Verfahren nach Anspruch 1 oder 2, bei dem das mindestens eine Bild (2) auf einer Hülle für einen Tonträger, der die Klänge umfasst, dargestellt wird, und/oder bei dem das mindestens eine Bild einer Audioquelle, die die Klänge umfasst, zugeordnet wird.

4. Verfahren nach einem der voranstehenden Ansprüche, bei dem die Klänge Musik, Stimmen und/oder Geräusche umfassen.

5. System zum Anpassen einer Beleuchtung von mindestens einem Beleuchtungsmodul (6) eines Kraftfahrzeugs an Klänge, die von einer Soundanlage (10) des Kraftfahrzeugs erzeugt und ausgegeben werden, wobei das System eine Datenverarbeitungseinheit (12) aufweist, wobei den Klängen mindestens ein Bild (2) zugeordnet ist, wobei die Datenverarbeitungseinheit (12) dazu ausgebildet ist, eine zumindest abschnittsweise Darstellung des mindestens einen Bilds (2) von dem mindestens einen Beleuchtungsmodul (6) zeitlich korreliert mit den ausgegebenen Klängen automatisch zu veranlassen, wobei das System ein Auswahlmodul (4) aufweist, das dazu ausgebildet ist, jeweils einen Abschnitt des mindestens einen Bilds (2) auszuwählen und einzulesen, **dadurch gekennzeichnet, dass** jeweils nur ein ausgewählter linienförmiger und/oder schlitzförmiger Abschnitt des mindestens einen Bilds (2) dargestellt wird.

6. System nach Anspruch 5, bei dem die Datenverarbeitungseinheit (12) dazu ausgebildet ist, das mindestens eine Bild (2) aus einer Datenbank zu übernehmen und/oder einzuscannen.

7. System nach Anspruch 5 oder 6, bei dem das mindestens eine Beleuchtungsmodul (6) als Display und/oder als Innenraumbeleuchtung des Kraftfahrzeugs ausgebildet ist.

8. System nach einem der Ansprüche 5 bis 7, bei dem das mindestens eine Beleuchtungsmodul (6) linienförmig ausgebildet ist.

## Claims

1. A method for adapting lighting of at least one lighting module (6) of a motor vehicle to sounds which are generated and output by a sound system (10) of the motor vehicle, wherein the sounds are assigned at least one image (2) which is automatically displayed by the at least one lighting module (6) at least in sections and correlated in time with the output sounds, wherein respectively one section of the at least one image (2) is selected and read in by a selection module (4), **characterized in that** respectively only one selected linear and/or slit-shaped section of the at least one image (2) is displayed.

2. The method according to claim 1, wherein the at least one image (2) is dynamically displayed by the at least one lighting module (6) based on at least one acoustic parameter of the sounds.

3. The method according to claim 1 or 2, wherein the at least one image (2) is displayed on a cover for an audio carrier comprising the sounds, and/or wherein the at least one image is assigned to an audio source comprising the sounds.

4. The method according to one of the preceding claims, wherein the sounds comprise music, voices and/or noises.

5. A system for adapting lighting of at least one lighting module (6) of a motor vehicle to sounds which are generated and output by a sound system (10) of the motor vehicle, wherein the system has a data processing unit (12), wherein the sounds are assigned at least one image (2), wherein the data processing unit (12) is designed to automatically initiate a display of the at least one image (2) by the at least one lighting module (6) at least in sections and correlated in time with the output sounds, wherein the system has a selection module (4) which is designed to respectively select and read in one section of the at least one image (2), **characterized in that** respectively only one selected linear and/or slit-shaped section of the at least one image (2) is displayed.

6. The system according to claim 5, wherein the data processing unit (12) is designed to take the at least one image (2) from a database and/or scan it.

7. The system according to claim 5 or 6, wherein the at least one lighting module (6) is designed as a display and/or as interior lighting of the motor vehicle.

8. The system according to one of claims 5 to 7, wherein the at least one lighting module (6) is designed in a linear shape.

## Revendications

1. Procédé d'adaptation d'un éclairage d'au moins un module d'éclairage (6) d'un véhicule automobile à des sons qui sont produits et émis par une installation sonore (10) du véhicule automobile, au moins une image (2) étant associée aux sons, laquelle est représentée automatiquement par le au moins un module d'éclairage (6) au moins par sections et en corrélation temporelle avec les sons émis, une section de la au moins une image (2) étant à chaque fois sélectionnée et lue par un module de sélection (4), **caractérisé en ce que** seule une section sélectionnée en forme de ligne et/ou de fente de la au moins une image (2) est à chaque fois représentée.

2. Procédé selon la revendication 1, dans lequel la au moins une image (2) est représentée de manière dynamique par le au moins un module d'éclairage (6) à l'aide d'au moins un paramètre acoustique des sons.

3. Procédé selon la revendication 1 ou 2, dans lequel la au moins une image (2) est représentée sur une pochette pour un support audio comprenant les sons et/ou dans lequel la au moins une image est associée à une source audio comprenant les sons.

4. Procédé selon l'une des revendications précédentes, dans lequel les sons comprennent de la musique, des voix et/ou des bruits.

5. Système d'adaptation d'un éclairage d'au moins un module d'éclairage (6) d'un véhicule automobile à des sons qui sont produits et émis par une installation sonore (10) du véhicule automobile, le système présentant une unité de traitement de données (12), au moins une image (2) étant associée aux sons, l'unité de traitement de données (12) étant conçue de manière à provoquer automatiquement une représentation de la au moins une image (2) par le au moins un module d'éclairage (6) au moins par sections et en corrélation temporelle avec les sons émis, le système présentant un module de sélection (4), conçu pour sélectionner et lire respectivement une section de la au moins une image (2), **caractérisé en ce que** seule une section sélectionnée en forme de ligne et/ou de fente de la au moins une image (2) est à chaque fois représentée.

6. Système selon la revendication 5, dans lequel l'unité de traitement de données (12) est conçue pour reprendre la au moins une image (2) d'une base de données et/ou la numériser.

7. Système selon la revendication 5 ou 6, dans lequel le au moins un module d'éclairage (6) est conçu comme un écran et/ou comme un éclairage de l'habitacle du véhicule automobile.

8. Système selon l'une des revendications 5 à 7, dans lequel le au moins un module d'éclairage (6) présente une forme linéaire.
